# EUROPEAN PATENT SPECIFICATION

(11) **EP 0 503 791 B1**
(45) Date of publication and mention of the grant of the patent: **16.04.1997**
(21) Application number: 92301513.5
(22) Date of filing: 24.02.1992
(51) Int. Cl.: C08F 297/08, C08F 2/34, C08F 4/64

(54) **Process for producing bimodal ethylene polymers in tandem reactors**
Verfahren zur Herstellung von bimodale Polyethylen in Serien-Reaktoren
Procédé de fabrication de polyéthylène bimodal dans des réacteurs en série

(30) Priority: 06.03.1991 US 655054
(43) Date of publication of application: 16.09.1992
(60) Divisional application: 96113388.1
(73) Proprietor: MOBIL OIL CORPORATION, Fairfax, Virginia 22037-0001 (US)
(72) Inventor: Ali, Ahmed Hussein, Somerset, New Jersey 08873 (US); Hagerty, Robert Olds, Metuchen, New Jersey 08840 (US); Ong, Shihmay Christine, Warren, New Jersey 07059 (US)
(74) Representative: Colmer, Stephen Gary

(56) References cited:
- EP-A- 0 369 436
- CHEMICAL ABSTRACTS, vol. 102, no. 6, 1 February 1985, Columbus, Ohio, US; abstract no. 46432V, 'ethylene copolymers' page 13 ;column 2 ; & JP-A-59 179 508 (TOA NENRYO K.K.K.) 12-10-1984
- CHEMICAL ABSTRACTS, vol. 102, no. 6, 1 February 1985, Columbus, Ohio, US; abstract no. 46433W, 'ETHYLENE COPOLYMERS' page 13 ;column 2 ; & JP-A-59 179 507 (TOA NENRYO K.K.K.) 12-10-1984

## Description

The invention relates to a process for producing bimodal ethylene polymer compositions comprising a mixture of relatively high and low molecular weight polymers by gas-phase, fluidized bed polymerization in tandem reactors.

JP-A-59179508 and JP-A-59179507 describe copolymers having broad molecular weight distribution, good moldability, and good mechanical properties. They are prepared by polymerising C₂ H₄ and alpha-olefins in two stages with catalysts containing organoaluminum compounds and components prepared from magnesium alkoxides, halogenated hydrocarbons, electron donors and titanium compounds.

EP-A-369436 describes a process for the in-situ blending of polymers comprising continuously contacting, under polymerization conditions, a mixture of ethylene and at least one alpha-olefin having at least 3 carbon atoms with a catalyst in at least two fluidized bed reactors.

In accordance with this invention, bimodal ethylene polymer blends having a desirable combination of processability and mechanical properties are produced by a process including the steps of polymerizing gaseous monomeric compositions comprising a major proportion of ethylene in at least two gas phase, fluidized bed reactors operating in the tandem mode under the following conditions. In the first reactor, a gas comprising monomeric composition and, optionally, a small amount of hydrogen, is contacted under polymerization conditions with a Ziegler-Natta or coordination catalyst comprising a transition metal compound as primary catalyst component and a reducing agent such as an organometallic compound or metal hydride as cocatalyst, at a hydrogen/ethylene molar ratio of no higher than about 0.3 and an ethylene partial pressure no higher than about 100 psia (690 kPa) such as to produce a relatively high molecular weight (HMW) polymer powder wherein the polymer is deposited on the catalyst particles. The HMW polymer powder containing the catalyst is then transferred to a second reactor with, optionally, additional cocatalyst which may be the same or different from the cocatalyst utilized in the first reactor but with no additional transition metal catalyst component, together with a gaseous mixture comprising hydrogen and monomeric composition wherein additional polymerization is carried out at a hydrogen/ethylene molar ratio of at least about 0.9, the ratio being sufficiently high such that it is at least about 8.0 times that in the first reactor, and an ethylene partial pressure at least 1.7 times that in the first reactor, to produce a relatively low molecular weight (LMW) polymer much of which is deposited on and within the HMW polymer/catalyst particles from the first reactor, such that the fraction of HMW polymer in the bimodal polymer leaving the second reactor is at least about 0.35.

The foregoing conditions provide for a process wherein the production of fines tending to foul compressors and other equipment is kept to a relatively low level. Moreover, such conditions provide for an inhibited level of productivity in the first reactor with a resulting increased level of productivity in the second reactor to produce a bimodal polymer blend having a favorable melt flow ratio (MFR, an indication of molecular weight distribution) and a high degree of homogeneity (indicated by low level of gels and low heterogeneity index) caused by a substantial degree of blending of HMW and LMW polymer in each final polymer particle inherently resulting from the process operation. The bimodal blend is capable of being processed without undue difficulty into films and containers for household industrial chemicals having a superior combination of mechanical properties.

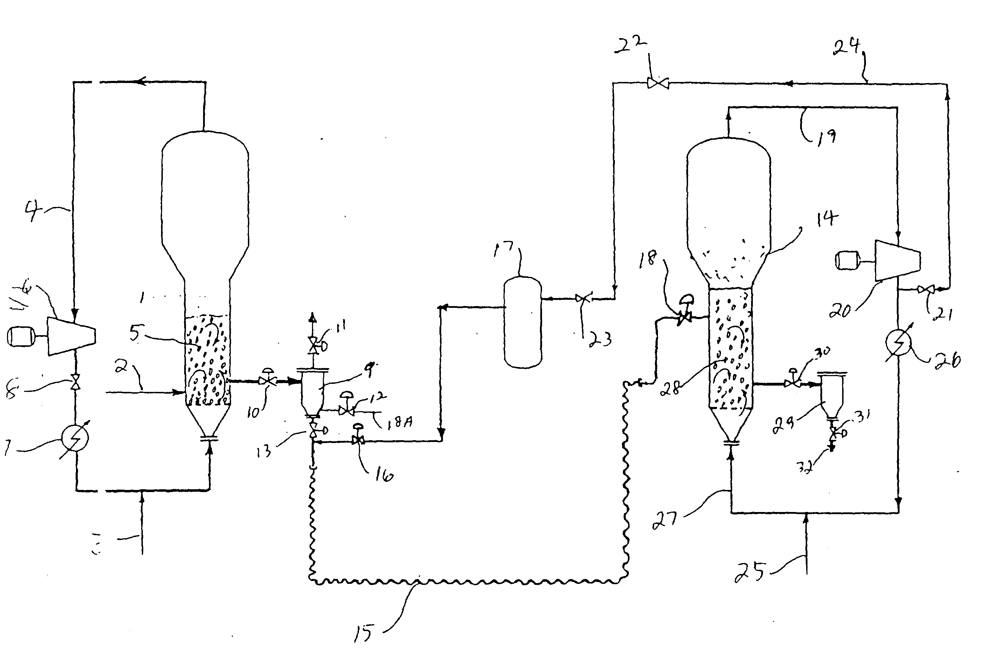

The drawing is a schematic diagram of a process illustrating the invention.

The gaseous monomer entering both reactors may consist wholly of ethylene or may comprise a preponderance of ethylene and a minor amount of a comonomer such as a 1-olefin containing 3 to about 10 carbon atoms. Comonomeric 1-olefins which may be employed are, for example, 1-butene, 1-pentene, 1-hexene, 4-methyl-1-pentene, 1-octene, 1-decene, and mixtures thereof. The comonomer may be present in the monomeric compositions entering either or both reactions.

In many cases, the monomer composition will not be the same in both reactors. For example, in making resin intended for high density film, it is preferred that the monomer entering the first reactor contain a minor amount of comonomer such as 1-hexene so that the HMW component of the bimodal product is a copolymer, whereas the monomer fed to the second reactor consists essentially of ethylene so that the LMW component of the product is substantially an ethylene homopolymer. When a comonomer is employed the molar ratio of comonomer to ethylene may be from 0.005 to 0.7, preferably from 0.04 to 0.6.

Hydrogen may or may not be used to modulate the molecular weight of the HMW polymer made in the first reactor. Thus, hydrogen may be fed to the first reactor such that the molar ratio of hydrogen to ethylene (H₂/C₂ ratio) is, for example, up to about 0.3, preferably from 0.005 to 0.2. In the second reactor it is necessary to produce a LMW polymer with a low enough molecular weight and in sufficient quantity so as to produce a bimodal resin which can be formed, with a minimum of processing difficulties, into end use products such as films and containers for household industrial chemicals having a superior combination of mechanical properties. For this purpose, hydrogen is fed to the second reactor with the ethylene containing monomer such that the hydrogen to ethylene mole ratio in the gas phase is at least about 0.9, preferably from 0.9 to 5.0 and most preferably from 1.0 to 3.5. Moreover, to provide a sufficient difference between the molecular weights of the polymers in the first and second reactor so as to obtain a bimodal resin product having a wide enough molecular weight distribution necessary for the desired levels of processability and mechanical properties, the hydrogen to ethylene mole ratios in the two reactors should be such that the ratio in the second reactor is at least about 8.0 times the ratio in the first reactor, for example from 8.0 to 10,000 times such ratio, and preferably 10 to 200 times the ratio in the first reactor.

Utilizing the hydrogen to ethylene ratios set out previously to obtain the desired molecular weights of the HMW and LMW polymers produced in the first and second reactors respectively tends to result in relatively high polymer productivity in the first reactor and relatively low productivity in the second reactor. This tends to result in turn in a bimodal polymer product containing too little LMW polymer to maintain satisfactory processability. A significant part of this invention lies in the discovery that this effect can be largely overcome by employing ethylene partial pressures in the two reactors so as to reduce the polymer productivity in the first reactor and raise such productivity in the second reactor. For this purpose, the ethylene partial pressure employed in the first reactor is no higher than about 100 psia (690 kPa), for example from 15 to 100 psia (103 to 690 kPa), preferably from 20 to 80 psia (138 to 552 kPa) and the ethylene partial pressure in the second reactor is, for example from 25 to 170 psia (172 to 1170 kPa), preferably from 70 to 120 psia (483 to 827 kPa), with the ethylene partial pressures in any specific process being such that the ratio of ethylene partial pressure in the second to that in the first reactor is at least about 1.7, preferably from 1.7 to 7.0, and more preferably from 2.0 to 4.0.

If desired for any purpose, e.g., to control superficial gas velocity or to absorb heat of reaction, an inert gas such as nitrogen may also be present in one or both reactors in addition to the monomer and hydrogen. Thus the total pressure in both reactors may be in the range, for example, from 100 to 600 psig (791 to 4240 kPa), preferably from 200 to 350 psig (1480 to 2510 kPa).

The temperature of polymerization in the first reactor may be from 60 to 130°C, preferably from 60 to 90°C, while the temperature in the second reactor may be from 80 to 130°C, preferably from 90 to 120°C. For the purpose of controlling molecular weight and productivity in both reactors, it is preferred that the temperature in the second reactor be at least about 10°C higher, preferably from 30 to 60°C higher than that in the first reactor.

The residence time of the catalyst in each reactor is controlled so that the productivity is suppressed in the first reactor and enhanced in the second reactor, consistent with the desired properties of the bimodal polymer product. Thus, the residence time may be, for example, from 0.5 to 6 hours, preferably from 1 to 3 hours in the first reactor, and, for example, from 1 to 12 hours, preferably from 2.5 to 5 hours in the second reactor, with the ratio of residence time in the second reactor to that in the first reactor being in the range, for example, from 5 to 0.7, preferably from 2 to 1.

The superficial gas velocity through both reactors is sufficiently high to disperse effectively the heat of reaction so as to prevent the temperature from rising to levels which could partially melt the polymer and shut the reactor down, and high enough to maintain the integrity of the fluidized beds. Such gas velocity may be from 40 to 120, preferably from 50 to 90 cm/sec.

The productivity of the process in the first reactor in terms of grams of polymer per gram atom of transition metal in the catalyst multiplied by 10⁶, may be from 1.6 to 16.0, preferably from 3.2 to 9.6; in the second reactor, the productivity may be from 0.6 to 9.6, preferably from 1.6 to 3.5, and in the overall process, the productivity may be from 2.2 to 25.6, preferably from 4.8 to 16.0. The foregoing ranges are based on analysis of residual catalyst metals in the resin product.

The polymer produced in the first reactor has a flow index (FI or I₂₁, measured at 190°C in accordance with ASIM D-1238, Condition F), for example, from 0.05 to 5, preferably from 0.1 to 3 grams/10 min. and a density from 0.890 to 0.960, preferably from 0.900 to 0.940 grams/cc.

The polymer produced in the second reactor has a melt index (MI or I₂, measured at 190°C in accordance with ASTM D-1238, Condition E) from 10 to 4000, preferably from 15 to 2000 grams/10 min. and a density from 0.890 to 0.976, preferably from 0.930 to 0.976 grams/cc. These values are calculated based on a single reactor process model using steady state process data.

The final granular bimodal polymer from the second reactor has a weight fraction of HMW polymer of at least about 0.35, preferably from 0.35 to 0.75, more preferably from 0.45 to 0.65, a flow index from 3 to 200, preferably from 6 to 100 grams/10 min., a melt flow ratio (MFR, calculated as the ratio of flow index to melt index) from 60 to 250, preferably from 80 to 150, a density from 0.89 to 0.965, preferably from 0.910 to 0.960, an average particle size (APS) from 127 to 1270, preferably from 380 to 1100 micrometer (microns), and a fines content (defined as particles which pass through a 120 mesh screen) of less than about 10 weight percent, preferably less than about 3 weight percent. With regard to fines content, it has been found that a very low amount of fines are produced in the first (HMW) reactor and that the percentage of fines changes very little across the second reactor. This is surprising since a relatively large amount of fines are produced when the first or only reactor in a gas phase, fluidized bed system is used to produce a relatively low molecular weight (LMW) polymer as defined herein. A probable explanation for this is that in the process of this invention, the LMW polymer formed in the second reactor deposits primarily within the void structure of the HMW polymer particles produced in the first reactor, minimizing the formation of LMW fines. This is indicated by an increase in settled bulk density (SBD) across the second reactor while the APS stays fairly constant.

When pellets are formed from granular resin which was stabilized and compounded with two passes on a Brabender extruder to ensure uniform blending, such pellets have a flow index in the range, for example, of about 3 to 200, preferably about 6 to 100 grams/10 min., a melt flow ratio in the range, for example, of about 60 to 250, preferably about 80 to 150, and a heterogeneity index (HI, the ratio of the FI's of the granular to the pelleted resin) in the range for example of about 1.0 to 1.5, preferably about 1.0 to 1.3. HI indicates the relative degree of inter-particle heterogeneity of the granular resin.

The catalyst used in the polymerization is a Ziegler-Natta catalyst, also referred to in the literature as a coordination catalyst. These catalysts are composed of a transition metal compound as primary catalyst component agent, and a reducing agent as cocatalyst, generally an organometallic compound, or a metal hydride. The transition metal may be, for example any of those in Groups IVb, Vb, VIb of the Periodic Table and is preferably titanium, e.g., in the form of a halide such as titanium trichloride or tetrachloride, while the metal of the organometallic compound or metal hydride may be selected from those in Groups Ia, IIa or IIIa of the Periodic Table, and is preferably aluminum in the form of a hydrocarbyl aluminum such as an alkyl aluminum halide or an aluminum trialkyl.

A preferred group of Ziegler-Natta catalysts contemplated for use in the process of this invention are those in which the transition metal compound is dissolved with at least one inorganic halide of a metal from Groups IIa, IIIa or the first transition series other than copper of the Periodic Table, e.g., a magnesium halide such as magnesium chloride in a solvent with electron donor properties, e.g., containing carbon-oxygen or carbon-nitrogen bonds. The resulting complex may then be utilized with an organometallic compound or metal hydride cocatalyst as is in the polymerization process. Advantageously, however, these catalysts are supported on an inorganic porous carrier such as a silicon oxide and/or an aluminum oxide. The supported catalyst may be prepared by impregnating the carrier with transition metal complex before combining it with the organometallic or metal hydride cocatalyst, inside or outside the reactor to form the final supported catalyst.

One suitable class of catalysts of the foregoing category comprises:
(i) a catalyst precursor complex or mixture of complexes consisting essentially of magnesium, titanium, a halogen, and an electron donor; and
(ii) at least one hydrocarbyl aluminum cocatalyst.

The titanium based complex or mixture of complexes is exemplified by an empirical formula MgₐTi(OR)_{b}X_{c}(ED)_{d} wherein R is an aliphatic or aromatic hydrocarbon radical having 1 to 14 carbon atoms or COR' wherein R' is an aliphatic or aromatic hydrocarbon radical having 1 to 14 carbon atoms; each OR group is alike or different; X is Cl, Br, or I, or mixtures thereof; ED is an electron donor, which is a liquid Lewis base in which the precursors of the titanium based complex are soluble; a is 0.5 to 56; b is 0,1, or 2; c is 1 to 116, particularly 2 to 116; and d is 2 to 85.

The titanium compound, which can be used in the above preparations, has the formula Ti(OR)ₐX_{b} wherein R and X are as defined for component (i) above; a is 0, 1 or 2; b is 1 to 4; and a+b is 3 or 4. Suitable compounds are TiCl₃, TiCl₄, Ti(OC₆H₅)Cl₃, Ti(OCOCH₃)Cl₃ and Ti (OCOC₆H₅)Cl₃.

The magnesium compound has the formula MgX₂ wherein X is as defined for component (i) above. Suitable examples are MgCl₂, MgBr₂, and MgI₂. Anhydrous MgCl₂ is a preferred compound. About 0.5 to 56, and preferably about 1 to 10, moles of the magnesium compound are used per mole of titanium compound.

The electron donor used in the catalyst composition is an organic compound, liquid at temperatures in the range of about 0°C to about 200°C. It is also known as a Lewis base. The titanium and magnesium compounds are both soluble in the electron donor.

Electron donors can be selected from the group consisting of alkyl esters of aliphatic and aromatic carboxylic acids, aliphatic ketones, aliphatic amines, aliphatic alcohols, alkyl and cycloalkyl ethers, and mixtures thereof, each electron donor having 2 to 20 carbon atoms. Among these electron donors, the preferred are alkyl and cycloalkyl ethers having 2 to 20 carbon atoms; dialkyl, diaryl, and alkyaryl ketones having 3 to 20 carbon atoms; and alkyl, alkoxy, and alkylalkoxy esters of alkyl and aryl carboxylic acids having 2 to 20 carbon atoms. The most preferred electron donor is tetrahydrofuran. Other examples of suitable electron donors are methyl formate, ethyl acetate, butyl acetate, ethyl ether, dioxane, di-n-propyl ether, dibutyl ether, ethyl formate, methyl acetate, ethyl anisate, ethylene carbonate, tetrahydropyran, and ethyl propionate.

The cocatalyst may, for example, have the formula AlR"ₑX'_{f}H_{g} wherein X' is Cl or OR"; R" and R" are saturated aliphatic hydrocarbon radicals having 1 to 14 carbon atoms and are alike or different; f is 0 to 1.5; g is 0 or 1; and e + f + g = 3. Examples of suitable R, R', R" , and R" radicals are: methyl, ethyl, propyl, isopropyl, butyl, isobutyl, tert-butyl, pentyl, neopentyl, hexyl, 2-methylpentyl, heptyl, octyl, isooctyl, 2-ethyhexyl, 5,5-dimethylhexyl, nonyl, isodecyl, undecyl, dodecyl, cyclohexyl, cycloheptyl, and cyclooctyl. Examples of suitable R and R' radicals are phenyl, phenethyl, methyloxyphenyl, benzyl, tolyl, xylyl, naphthal, and methylnaphthyl. Some examples of useful cocatalyst are triisobutylaluminum, trihexyaluminum, di-isobutylaluminum, hydride, dihexylaluminum hydride, di-isobutylhexylaminum, trimethylaluminum, triethylaluminum, diethylaluminum chloride, Al₂(C₂H₅)₃Cl₃, and Al(C₂H₅)₂(OC₂H₅).

While it is not necessary to support the complex or catalyst precursors mentioned above, supported catalyst precursors do provide superior performance and are preferred. Silica is the preferred support. Other suitable inorganic oxide supports are aluminum phosphate, alumina, silica/alumina mixtures, silica pretreated with an organoaluminum compound such as triethyaluminum, and silica modified with diethylzinc, such modifier being used in a quantity sufficient to react with the hydroxyl groups on the support which otherwise tend to react with and deactivate part of the titanium in the catalyst, but not in sufficient quantity to function as a cocatalyst. A typical support is a solid, particulate material essentially inert to the polymerization. It is used as a dry powder having an average particle size of about 10 to 250 micrometer (microns) and preferably about 30 to about 100 micrometer (microns); a surface area of at least about 3 square meters per gram and preferably at least about 50 square meters per gram; and a pore size of at least about 80 Angstroms and preferably at least about 100 Angstroms. Generally, the amount of support used is that which will provide about 0.01 to about 0.5, and preferably about 0.2 to about 0.35 millimole of transition metal per gram of support. Impregnation of the abovementioned catalyst precursor into, for example, silica is accomplished by mixing the complex and silica gel in the electron donor solvent followed by solvent removal under reduced pressure and/or elevated temperature.

In most instances, it is preferred that the titanium/magnesium precursor not be combined with the hydrocarbyl aluminum cocatalyst prior to being fed to the first reactor, but that these components be fed to such reactor separately, and that an additional quantity of the hydrocarbyl aluminum cocatalyst be fed to the second reactor in an amount sufficient to increase catalyst activity in the second reactor. However, in some embodiments of the process, it may be desirable to prereduce or activate the titanium/magnesium complex with an amount of cocatalyst prior to feeding the complex to the first reactor. When this is done, it is nevertheless often advantageous to feed additional quantities of cocatalyst to each reactor to maintain the level of activity of or fully activate the catalyst. The cocatalyst is fed to each reactor neat or as a solution in an inert solvent such as isopentane. If the titanium/magnesium complex is partially activated with cocatalyst prior to being fed to the reactor, the cocatalyst used for the partial activation may be the same or different from that fed separately to each reactor. Preferred cocatalysts for partial activation of the titanium/magnesium complex prior to its being fed to the reactor are tri-n-hexylaluminum, diethylaluminum chloride, triethylaluminum and triisobutylaluminum, or a mixture of any of these.

Although not generally preferred, it may be advantageous in some systems to employ a catalyst of the foregoing type in the form of a "prepolymer," prepared by contacting the titanium/magnesium complex, and the hydrocarbyl aluminum cocatalyst with ethylene under polymerization conditions, before the catalyst is fed to the first polymerization reactor.

Broadly, exemplary ranges and preferred ranges of molar ratios of various components of the foregoing catalyst systems utilizing titanium/magnesium complexes are as follows:

**Table I**

| | Catalyst Components | Broad Exemplary Range | Preferred Range |
|---|---|---|---|
| 1. | Mg:Ti | 0.5:1 to 56:1 | 1.5:1 to 5:1 |
| 2. | Mg:X | 0.005:1 to 28:1 | 0.075:1 to 1:1 |
| 3. | Ti:X | 0.01:1 to 0.5:1 | 0.05:1 to 0.2:1 |
| 4. | Mg:ED | 0.005:1 to 28:1 | 0.15:1 to 1.25:1 |
| 5. | Ti:ED | 0.01:1 to 0.5:1 | 0.1:1 to 0.25:1 |
| 6. | Cocatalyst used as Partial Activator:Ti | 0:1 to 50:1 | 0:1 to 5:1 |
| 7. | Total Cocatalyst:Ti | 0.6:1 to 250:1 | 11:1 to 105:1 |
| 8. | ED:Al | 0.05:1 to 25:1 | 0.2:1 to 5:1 |

Specific examples of the described catalysts comprising a titanium/magnesium complex, and methods for their preparation are disclosed, for example, in U.S. Patent Nos. 3,989,881; 4,124,532, 4,174,429; 4,349,648; 4,379,759; 4,719,193; and 4,888,318; and European Patent application Publication Nos. 0 012 148; 0 091 135; 0 120 503; and 0 369 436.

Another type of catalyst suitable for the process of invention are those utilizing a Ti/Mg complex prepared by the concurrent interacting of a previously dried, solid, porous, inorganic carrier, e.g., silica with a dialkylmagnesium wherein the alkyl group contain, for example, 1 to 12 carbon atoms, e.g., dibutylmagnesium (DBM), titanium tetrachloride, and with or without an electron donor, e.g., an ether or ester such as ethyl benzoate, tetrahydrofuran, or n-butyl ether. Such a Ti/Mg complex is utilized with a hydrocarbyl aluminum cocatalyst of the type and in the manner described previously in connection with other types of Ti/Mg complexes in practicing the process of this invention. The activity of the catalyst may be enhanced by using as a cocatalyst diisobutylaluminum hydride (DIBAH) or triisobutylaluminum (TIBA) and by feeding isopentane into the first reactor with the catalyst.

Still another class of catalysts which may be used in the process of this invention is prepared by treating a previously dried, solid, inorganic, porous carrier containing OH groups, e.g., silica, with a liquid, e.g., tetrahydrofuran, containing a hydrocarbyl magnesium, e.g. ethylmagnesium chloride, evaporating liquid from the so-treated carrier leaving a magnesium precipitate on the carrier surface, and contacting the resulting powder with a solution of transition metal compound, e.g., a tetravalent titanium compound such as titanium tetrachloride, to form a transition metal/Mg complex or mixture of complexes on the surface of the carrier. The carrier may be initially dried in the presence of an oxygen-containing gas such as air rather than an inert gas such as nitrogen. The resulting supported transition metal/Mg complex may be utilized with a hydrocarbyl aluminum cocatalyst as disclosed previously with other Ti/Mg complexes, added to the first or both reactors. If hydrocarbyl aluminum cocatalysts are added to both reactors, they may be the same or different. Various catalysts of this type and methods of preparing them are described in U.S. Patent Nos. 4,481,301 and 4,562,169, the entire disclosures of which are incorporated herein by reference.

Also suitable in carrying out the process of this invention are catalysts prepared by pre-treating a dried magnesium oxide (MgO) support with an organic acid, e.g. 2-ethoxybenzoic acid, and contacting the resulting pre-treated support material with a titanium compound which is the reaction product of titanium tetrachloride and an alkanol having 5 to 12 carbon atoms. The material is then treated with a hydrocarbylaluminum, e.g., tri-n-hexylaluminum to obtain the supported catalyst, which may be utilized with additional amounts of a hydrocarbylaluminum cocatalyst, e.g., di-n-hexylaluminum hydride (DIBAH), as described previously in connection with various Ti/Mg complexes, in practicing the process of this invention. The catalysts are described more fully in U.S. Patent No. 4,863,886.

Another group of catalysts suitable for the process of this invention are those prepared by treating a magnesium oxide (MgO) support with an organic acid, e.g., 2-ethyxybenzoic acid, acetic acid, or actanoic acid, reacting the treated support with titanium tetrachloride, and pre-reducing the catalyst with an aluminum alkyl, e.g., triethylaluminum, tri-n-hexylaluminum, diisobutylaluminum hydride, or trimethylaluminum. During polymerization, a cocatalyst is used which may also be an aluminum alkyl such as any of those in the foregoing list of pre-reducing agents.

The amount of cocatalyst utilized in the Ziegler-Natta catalyst employed in the process of this invention whether for pre-reduction or activation of the catalyst prior to polymerization or added to the first reactor or both, is generally in the range, for example, of about 2 to 100 gram atoms of cocatalyst metal, e.g., aluminum, per gram atom of transition metal, e.g., titanium, preferably about 5 to 50 gram atoms of cocatalyst metal per gram atom of transition metal. Any amount of cocatalyst added to the second reactor is not included in the foregoing ranges. However, it is preferred that additional cocatalyst be fed to the second reactor to increase catalyst activity.

Referring now to the drawing, catalyst component containing transition metal, e.g. titanium, is fed into first reactor 1 through line 2. Ethylene, comonomer, e.g., n-hexene, if used, hydrogen, if used, inert gas such as nitrogen, if used, and cocatalyst, e.g. triethylaluminum (TEAL), are fed through line 3 into recycle line 4 where they are combined with recycle gas and fed into the bottom of reactor 1. The gas velocity is high enough and the size and density of the particles in reactor 1 are such as to form a fluidized or dense bed 5 comprising catalyst particles associated with polymer formed by the polymerization of ethylene and, if present, comonomer within reactor 1. The conditions in reactor 1, e.g. partial pressure of ethylene, hydrogen/ethylene molar ratio, temperature, total pressure, etc. are controlled such that the polymer which forms is of relatively high molecular weight (HMW). Recycle gas leaving the top of reactor 1 through line 4 is recompressed in compressor 6, cooled in heat exchanger 7 after passing through valve 8 and are fed to the bottom of reactor 1 after being optionally combined with make-up gases and cocatalyst from line 3 as described.

Periodically, when sufficient HMW polymer has formed in reactor 1, the polymer and catalyst 1 are transferred to discharge tank 9 by opening valve 10 while valves 11, 12 and 13 remain closed. When an amount of the HMW polymer and catalyst from reactor 1 which is desired to be transferred has been fed to discharge tank 9, the transfer system to second reactor 14 is activated by opening valve 13 to force the HMW polymer and catalyst into transfer hose 15. Valve 13 is then closed to isolate transfer hose 15 from discharge tank 9 and valve 11 is opened, ensuring that any gases leaking through valve 13 are vented and do not back-leak across valve 10 into reactor 1. Transfer hose 15 is then pressurized with reactor-cycle gas from reactor 14 by opening valve 16. To minimize upsets in reactor 14, surge vessel 17 is used to store gas for pressuring transfer hose 15. With valve 16 still in the open position, valve 18 is opened to convey HMW polymer and catalyst into reactor 14. Both valves 16 and 18 are left open for a period to sweep transfer hose 15. Valves 18 and 16 are then closed sequentially. Transfer hose 15 is then vented by opening valve 13, valve 11 having remained open during the transfer operation. Discharge tank 9 is then purged with purified nitrogen through line 18A by opening valve 12.

During the transfer, cycle gas comprising hydrocarbons and hydrogen leaves reactor 14 through line 19, is compressed by compressor 20, flows through valves 21, 22 and 23 in line 24 and through surge tank 17, valve 16 and pressurized transfer hose 15 as described, thus effecting the transfer of HMW polymer and catalyst to reactor 14.

After the transfer to reactor 14 is effected, the flow of gas from reactor 14 to transfer hose 15 is stopped by closing valves 21, 22, 23 and 16. Ethylene, hydrogen, comonomer, e.g., n-hexene, if used, inert gas such as nitrogen, if used, and cocatalyst or catalyst component, if used, e.g., TEAL, are fed to reactor 14 through line 25 after being combined with unreacted cycle gas leaving the top of reactor 14 through line 19 which is compressed in compressor 20, cooled in heat exchanger 26 and enters the bottom of reactor 14 through line 27. The gas velocity and size and density of the particles in reactor 14 are such as to form fluidized or dense bed 28 of bimodal polymer particles associated with the catalyst, including the transition metal primary catalyst component added to reactor 1. The conditions in reactor 14, e.g., partial pressure of ethylene, hydrogen/ethylene ratio and temperature, are controlled such that a relatively low molecular weight (LMW) polymer forms primarily within the voids of the HMW polymer/catalyst particles transferred from reactor 1. After a sufficient amount of LMW polymer has formed resulting in a bimodal polymer having a desirable molecular weight distribution and other properties, the polymer is transferred to discharge tank 29 by opening valve 30 while keeping valve 31 closed. After substantially all the polymer has been transferred to discharge tank 29, it is collected by closing valve 30 and opening valve 31, resulting in the pressure discharge of the final polymer product through line 32.

The following Examples illustrate the invention.

### Example 1

A catalyst was prepared by reacting MgCl₂, tetrahydrofuran (THF) and TiCl₃.0.33 AlCl₃, adding the resulting complex to dehydrated silica treated with sufficient triethylaluminum to react with the OH groups in the silica but not enough to function significantly as partial activator or cocatalyst, drying the resulting silica supported catalyst precursor and pre-reducing or partially activating the supported precursor with tri-n-hexylaluminum, as cocatalyst. The procedure used to prepare the catalyst was substantially that of Example 4 of U.S. Patent No. 4,888,318 except that the partial activation of the supported magnesium and titanium precursor was carried out with tri-n-hexyaluminum alone as partial activator rather than the latter together with diethylaluminum chloride as shown in the patent. The free flowing catalyst powder [M-I(V)] contained the following weight percentages of components: Ti, 1.07; Mg, 1.7; Cl, 7.5; THF, 14.3; and Al, 1.98.

Using the foregoing partially activated catalyst, a gas phase, fluidized bed polymerization process was carried out using two reactors operating in the tandem mode as shown in the drawing. The process included the feeding of n-hexene as comonomer to reactor 1 (but not reactor 14) and triethylaluminum (TEAL) as cocatalyst to both reactors. Nitrogen was used to control the total pressure in both reactors at about 300 psig. Averages of other conditions in both reactors, which were controlled to produce a bimodal polymer suitable for being blow molded into bottles intended for household industrial chemicals (HIC), are shown in Table II, wherein "PC₂=" is the partial pressure of the ethylene, "H₂/C₂" is the molar ratio of hydrogen to ethylene, and "C₆/C₂" is the molar ratio of n-hexene to ethylene with the gas phase.

**Table II**

| | Reactor 1 (HMW) | Reactor 14 (LMW) |
|---|---|---|
| Temp. (°C) | 84.3 | 104.9 |
| PC₂ ⁼ (psi) | 41 (283 kPa) | 98 (676 kPa) |
| H₂/C₂ | 0.049 | 1.26 |
| C₆/C₂ | 0.032 | 0.0 |
| TEAL (ppmw) | 234 | 160 |
| Throughput (lb/hr) | 31 (14 kg/hr) | 55 (25 kg/hr) |
| Resid. Time (hrs) | 3.9 | 3.4 |
| Cat. feed (g/hr) | 6.7-7.2 | 0.0 |

The HMW polymer leaving reactor 1 was found by direct measurement to have a flow index (FI or I₂₁) of 0.79 g/10 min. and a density of 0.930 g/cc while the LMW polymer produced in reactor 14 was calculated from a single reactor process model to have a melt index (MI or I₂) of 135 g/10 min. and a density of 0.972 g/cc.

The granular bimodal polymer obtained from reactor 14 had a flow index of 38 g/10 min., a density of 0.952 g/cc, a fines content (defined as particles which pass through a 120 mesh screen) of 1.3 wt.%, a settled bulk density (SBD) of 27 lb/ft³ (432 kg/m³) and an average particle size (APS) of 0.027 inch (0.7 mm). It was obtained from reactor 14 at a productivity of 3200 kg/kg (lb/lb) or 14.3 x 10⁶ g/g-atom Ti based on the weight of partially activated catalyst utilized in the reaction as determined by residual metal analysis, and had a fraction of HMW component (X₁) of 0.56.

Using standard procedures, the granular bimodal polymer was formed into pellets which had the following properties: FI, 28 g/10 min.; melt flow ratio (MFR, the ratio of FI to MI), 71; density 0.953 g/cc; heterogeneity index (HI, the ratio of FI of granular to pelleted resin), 1.37; and a relatively low gel content. The relatively low value of heterogeneity index indicates a fairly high degree of inter-particle homogeneity probably caused by substantial blending of HMW and LMW polymer in each resin particle.

Using a Kautex blow molder, the pelleted resin was formed into a 16 oz. (0.45 kg) ASTM bottle which had a weight of 24.7 g and exhibited a diameter swell of 2.02 in (51 mm). The bottle was used for the pressurized environmental stress cracking resistance test (ESCR, ASTM D-1693) under the following conditions: 10 psi (69 kPa), 1/4 filled, 10% Igepal nonionic surfactant, 60°C. The bottle had a pressurized ESCR of 406 (F₅₀, hr.) and a top load strength 7.66 lb (3.5 kg).

### Example 2

The procedure of Example 1 was followed using slightly different process conditions as shown in Table III.

**Table III**

| | Reactor 1 (HMW) | Reactor 14 (LMW) |
|---|---|---|
| Temp. (°C) | 80.0 | 105.0 |
| PC₂ ⁼ (psi) | 32.0 (220 kPa) | 94.7 (653 kPa) |
| H₂/C₂ ratio | 0.032 | 1.07 |
| C₆/C₂ ratio | 0.032 | 0.0 |
| TEAL (ppmw) | 345 | 138 |
| Throughput (lb/hr) | 23 (10 kg/hr) | 64 (29 kg/hr) |
| Resid. Time (hrs) | 4.0 | 3.1 |
| Cat. feed (g/hr) | 9.7 | 0.0 |

The HMW polymer produced in reactor 1 had an FI of 0.57 g/10 min and a density of 0.927 g/cc., and the LMW polymer produced in reactor 14 was determined by backaveraging to have an MI of 81 g/10 min. and a density of 0.976 g/cc. The properties of the bimodal resin obtained from reactor 14 in both granular and pelleted form are shown in Table IV.

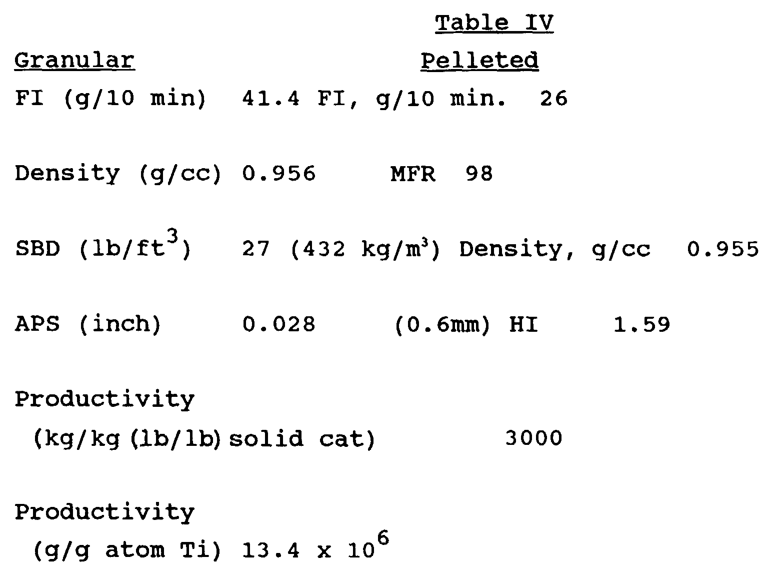

Bottles (ASTM, 0.45 kg (16 oz)) blow molded from the pelleted resin had the properties shown in Table V.

**Table V**

| | |
|---|---|
| Weight (g) | 26.3 |
| Diameter Swell (inches) | 2.12 (54 mm) |
| ESCR, F₅₀ (hr) | 406 |
| Top Load (lb) | 8.12 (3.7 kg) |

The properties of the bottles blow molded from the bimodal resin produced in Examples 1 and 2 allow for the production of thinner bottles and/or blending with recycle resin while still achieving specified minimum ESCR's.

### Example 3

The polymerization procedure of Examples 1 and 2 was followed except that the conditions of reaction were controlled to produce a relatively high molecular weight, high density film resin. Such conditions are shown in Table VI.

**Table VI**

| | Reactor 1 | Reactor 14 |
|---|---|---|
| Temp. (°C) | 80.0 | 104.9 |
| PC₂ ⁼ (psi) | 36 (248 kPa) | 105 (724 kPa) |
| H₂/C₂ ratio | 0.023 | 1.72 |
| C₆/C₂ ratio | 0.027 | 0.024 |
| TEAL (ppmw) | 382 | 240 |
| Throughput (lb/hr) | 27 (12 kg/hr) | 43 (20 kg/hr) |
| Resid. Time (hrs) | 3.8 | 4.8 |
| Cat. feed (g/hr) | 7.7 | 0.0 |

The HMW polymer produced in reactor 1 had an FI of 0.35 g/10 min. and a density of 0.955 g/cc and the LMW polymer produced in reactor 14 was calculated to have an MI of 427 g/10 min. and a density of 0.963 g/cc. The properties of the bimodal resin obtained from reactor 14 are shown in Table VII.

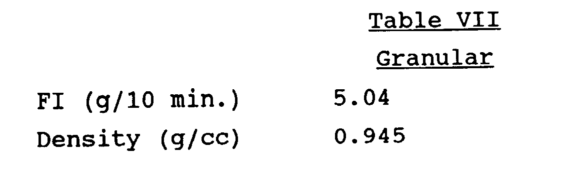

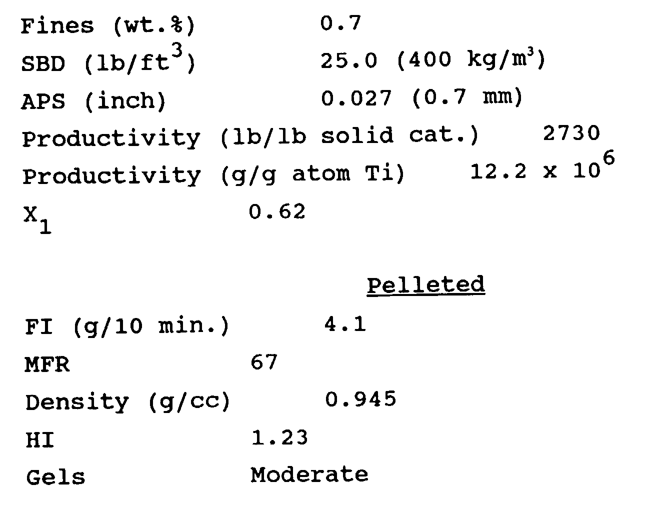

The bimodal resin could be formed with good processability into films of superior mechanical properties.

### Example 4

The catalyst utilized in this example was similar to that employed in Examples 1 to 3 except that the silica-supported Ti/Mg complex was not pre-reduced or partially activated with tri-n-hexylaluminum. The catalyst contained 1.13 wt.% Ti, 1.95 wt.% Mg., 8.22 wt.% Cl, 15.4 wt.% THF, and 1.41 wt.% Al.

The polymerization procedure of Examples 1 to 3 was generally followed using the specific process conditions shown in Table VIII.

**Table VIII**

| | Reactor 1 | Reactor 14 |
|---|---|---|
| Temp. (°C) | 75 | 105 |
| PC₂ ⁼ (psi) | 55 ± 5 (379 kPa ± 34) | 85 ± 7 (586 kpa ± 48) |
| H₂/C₂ ratio | 0.025 ± 0.005 | 2.0 ± 0.1 |
| C₆/C₂ ratio | 0.034 ± 0.004 | 0.033 ± 0.003 |
| TEAL (PPMW) | 280 | 110 |
| Throughput (1b/hr) | 28 (13 kg/hr) | 51 (23 kg/hr) |
| Resid. Time (hrs) | 2.8 | 3.4 |
| Cat. feed (g/hr) | 8.5 | 0.0 |

Properties of the HMW polymer produced in reactor 1 were as shown in Table IX.

**Table IX**

| | |
|---|---|
| FI (g/10 min) | 0.35 - 0.45 |
| Density (g/cc) | 0.929 - 0.931 |
| SBD (lb/ft³) | 18 (288 kg/m³) |
| Fines (wt.%) | 1.9 |
| APS (inch) | 0.023 (0.6 mm) |
| Productivity (lb/lb solid cat.) | 1500 |
| Productivity (g/g atom Ti) | 6.7 x 10⁶ |

Properties of the bimodal resin obtained from reactor 14, either granular or after pelletization, are shown in Table X.

**Table X**

| | Granular |
|---|---|
| SBD (lb/ft³) | 24 (384 kg/m³) |
| Fines (wt.%) | 1.9 |
| APS (inch) | 0.026 (0.7 mm) |
| Productivity (lb/lb solid cat) | 3300 |
| Productivity (g/g atom Ti) | 14.8 x 10⁶ |
| | |

| | Pelleted |
|---|---|
| FI (g/10 min) | 5 - 8.5 |
| Density (g/cc) | 0.944 - 0.946 |
| MFR | 95 - 105 |

Surprisingly, it was found that the non-prereduced catalyst of this example yielded a granular bimodal resin having a commercially acceptable settled bulk density (SBD) of 24 lb/ft³ (384 kg/m³) when used in the tandem mode process of this invention, whereas prereduction of the silica-supported Ti/Mg complex has been found to be necessary to obtain the level of SBD when the catalyst is used in a single stage gas phase fluidized bed process.

### Example 5

A catalyst was prepared as follows: 314.5 grams of Davison 955 (Trade Mark) grade silica, previously calcined at 600°C for 12 hours, was transferred into a 4-neck, 3-liter round bottom flask fitted with an overhead stirrer and under a slow nitrogen purge. The flask was placed into an oil bath at 60-65°C and about 1200 ml of dry hexane and 189 ml of dibutylmagnesium (1.02 Molar solution in heptane) were added. The contents of the flask were stirred for about one hour, after which 21.7 ml of titanium tetrachloride, diluted with about 75 ml of dry hexane, were added. After about one hour, the solvents were removed by rapid evaporation aided with a nitrogen purge. Yield: 341 grams of dark brown free-flowing powder. Analysis: Mg = 1.33 wt.%; Ti = 2.94 wt.%; Cl = 8.17 wt.%; silica = 84.3 wt.%.

In a simulated test for the suitability of this catalyst in the tandem reactor process of this invention, such catalyst was used to prepare an HMW copolymer of ethylene and n-hexene. The catalyst was used in a pilot plant gas phase fluidized bed reactor having a bed volume of 4.0 ft³ (0.11 m³) and operated at a reactor temperature of 75°C, a total pressure of 2510 kPa (350 psig,) an ethylene partial pressure of 83 psi (572 kPa), an H₂/C₂ molar ratio of 0.08, a C₆/C₂ molar ratio of 0.037, a use of trimethylaluminum (TMA) cocatalyst in an amount of 180 ppmw, and a productivity of 1300 kg/kg (lb/lb) solid catalyst to produce an HMW copolymer having an FI of 1.2 g/10 min., a flow ratio (FR) of 16.0 and a density of 0.936 g/cc. The flow ratio is defined as the flow index, defined previously, divided by an intermediate load melt index (I₅) measured at 190°C in accordance with ASTM D-1238, Condition P, under a load of 5 kilograms.

The foregoing HMW copolymer was melt blended with an LMW linear ethylene homopolymer having a melt index of 200 g/10 min. and a density of 0.974 g/cc using a twin-screw Brabender extruder to obtain a blend having HMW and LMW fractions of 0.5, an MI of 0.32 g/10 min. an FI of 36 g/10 min., an MFR of 112 and a density of 0.957 g/cc. With regard to blow molding properties, the blend has an annular die swell (ADS)-weight of 0.69 g/inch (0.27 g/cm) an ADS-diameter of 2.12 inches, (54 mm) and a relatively low melt fracture roughness of 100 microinches (2.5 micrometer (microns)).

The foregoing data indicates that the catalyst of this example is suitable for use in the tandem gas phase process of this invention to produce a bimodal resin having satisfactory properties for blow molding applications.

### Example 6

A catalyst was prepared as follows: 255.9 grams of Davison 955-600 (Trade Mark) silica were transferred into a 4-neck 3-liter round-bottom flask fitted with an overhead stirrer kept under a slow purge of nitrogen. Dry heptane in an amount of 1200 ml was added to the flask which was placed into an oil bath set at 60-65°C. Then, 181 ml of a 1.02 Molar solution of di-n-butylmagnesium (DBM) in heptane were added dropwise using an addition funnel. After 90 minutes, 30.5 ml of titanium tetrachloride diluted in about 100 ml of heptane were added to the silica/DBM slurry and stirred for 10 minutes. The heptane was removed by evaporation with a strong nitrogen purge for 6 hours and 286 grams of brown, free-flowing catalyst powder were recovered which analyzed as follows: Mg = 1.6 wt. %, Ti = 3.27 wt.%, and Cl = 9.97 wt.%.

The HMW polymerization procedure of Example 5 was followed under the following specific conditions: the ethylene partial pressure was 72.6 psi, (501 kPa) the H₂/C₂ ratio was 0.09, the C₆/C₂ ratio was 0.039, the cocatalyst was diisobutylaluminum hydride (DIBAH) in an amount of 330 ppmw, and the productivity was 2200 kg/kg (lb/lb) solid catalyst to produce an HMW copolymer having an FI of 1.5 g/10 min., an FR of 16 g/10 min, and a density of 0.938 g/cc.

The foregoing HMW copolymer was melt-blended as described in Example 5 with an LMW ethylene homopolymer having an MI of 86 g/10 min. and a density of 0.977 g/cc to produce a bimodal polymer blend having HMW and LMW fractions of 0.5, an MI of 0.32 g/10 min., an FI of 32 g/10 min. an MFR of 100 and a density of 0.955 g/cc. On blow molding this blend, it exhibited an ADS-weight of 0.67, an ADS-diameter of 2.06 inch (52 mm), and a low melt fracture roughness.

The results of this example indicates that catalysts based on silica, di-n-butylmagnesium and titanium tetrachloride with DIBAH as a cocatalyst are suitable for use in the process of this invention to produce superior blow molding resins at relatively high overall productivities. Similar results could be obtained with triisobutylaluminum (TIBA) as a cocatalyst with the described primary catalyst.

### Example 7

The catalyst was prepared as follows: In part A of the preparation, 289.5 grams of Davison 955-800 (Trade Mark) silica having a nominal average particle size of 50 micrometers (microns) were transferred into a 4-neck 3-liter round bottom flask fitted with an overhead stirrer and under a slow purge of nitrogen. About 1500 ml of dry tetrahydrofuran (THF) were added to the flask which was placed into an oil bath set at 60-65°C. Next 184 ml of a 2.0 Molar solution of ethylmagnesium chloride in THF was added dropwise using an addition funnel to the silica/THF slurry. After 10 minutes, the THF was removed by distillation to yield a white free flowing powder. The powder was dried for 16 hours under a slow nitrogen purge with the oil bath set at 80-85°C, and, except for 2 grams which were removed from the flask, constitute the part A product. The powder was found to contain 6.0 wt.% of THF.

In part B of the preparation, 1500 mls of heptane as received was placed into a 3-liter round bottom flask, and 162 ml of neat titanium tetrachloride was added dropwise to the heptane using an addition funnel. This solution was then siphoned into the part A product. The slurry was stirred for 1.5 hours with the oil bath at 80-85°C after which the silica was allowed to settle and the reaction solution was decanted through a gas dispersion tube under a slight nitrogen pressure. The silica was then washed six times with about 1500 ml of dry hexane. After the last wash, the silica was dried with a nitrogen purge to yield 370 grams of a very light tan catalyst precursor. Analysis: Mg = 2.52 wt.%, Ti = 3.36 wt.%, THF = 3.2 wt.%.

The foregoing catalyst was used to carry out a two stage, HMW first, gas phase fluidized bed process in the tandem mode as illustrated in the drawing and similar to that described in Example 1, under conditions such as to produce a superior high molecular weight, high density ethylene polymer film resin. As cocatalyst, triethylaluminum (TEAL) was fed to the first (HMW) reactor and trimethylaluminum (TMA) to the second (LMW) reactor. Ranges of reaction conditions employed are shown in Table XI.

**Table XI**

| | Reactor 1 (HMW) | Reactor 14 (LMW) |
|---|---|---|
| Temp. (°C) | 75-80 | 95-105 |
| PC₂ ⁼ (psi) | 40-60 (276-414 kPa) | 85-105 (586-724 kPa) |
| H₂/C₂ ratio | 0.030-0.040 | 1.9-2.2 |
| C₆/C₂ ratio | 0.025-0.040 | 0.030-0.040 |
| TEAL (ppmw) | 250-300 | none |
| TMA (ppmw) | none | 80-110 |
| Product (lb/hr) | 26 (12 kg/hr) | 24 (11 kg/hr) |
| Resid. Time (hrs) | 2.8 | 3.2 |
| Cat. feed (g/hr) (precursor) | 6.7-7.2 | none |

In addition to the conditions shown in Table XI, the cycle time for the transfer of polymer and catalyst from HMW reactor 1 to LMW reactor 14 was 2.5-3 min., the weight of polymer and catalyst per cycle was 2-4 lb (0.9 - 1.8 kg), and the residence time of the polymer and catalyst in transfer hose 15 was 30-45 sec.

The HMW polymer leaving reactor 1 was found by direct measurement to have an FI of 0.2-0.6 g/10 min., an FR of 15-17 g/10 min. a density of 0.928-0.939 g/cc, a fines content of 5 wt.%, an SBD of 21 lb/ft³ (336 kg/m³), and an APS of 0.025, and was produced at a productivity of 1.7-1.8 kg polymer/g catalyst, and the LMW polymer formed in reactor 15 was calculated from a single reactor process model to have an MI of 200-400 g/10 min. and a density of 0.955-0.963 g/cc and was determined by difference to be produced at a productivity of 1.5-1.6 kg polymer/g catalyst. The bimodal resin obtained from reactor 14 had an FI of 5-11 g/10 min., an MFR of 125-140, a fines content of 4 wt.%, an SBD of 26 lb/ft³ (416 kg/m³), an APS of 0.7 mm (0.026 in) and an HMW fraction (X₁) of 0.5-0.6 and was produced at a productivity of 3200 kg polymer/g catalyst.

The bimodal resin of this example was blow extruded into a film of 0.0125 mm (0.5 mil) thickness at a melt pressure of 7250 psi (50 MPa) and with good bubble stability. The film had a Dart Drop (F₅₀, g) of 395 (ASTM D-1709).

### Example 8

A catalyst was prepared as follows: as a support, 402.6 g MgO (obtained from the Calgon Division of Merck, designated R 1918 (Trade Mark)) were dried for over 60 hours under flowing purified N₂ to a dry weight of 392.9 g. The support was slurried in purified hexane and 0.01 mole 2-ethyoxybenzoic acid (2-EBA)/mole MgO (14.8 cc neat 2-EBA) was added and refluxed 4 hours. After cooling to room temperature, 8 mmol neat TiCl₄/g dried MgO (346 cc TiCl₄) were added dropwise to the 2-EBA-treated MgO, then refluxed 16 hours. The resulting solid was washed ten times with about 1000 cc of fresh, purified hexane each time, until there was no free TiCl₄ left in the washings. This catalyst precursor slurry was pre-reduced with tri-n-hexylaluminum (TnHAl- - 139 cc) at room temperature to give an Al/Ti ratio of about 0.25, based on an assumed Ti content of 1 mmol Ti/g finished catalyst. The pre-reduced catalyst was then dried at room temperature under flowing N₂. The finished catalyst contained, by weight, 4.48% Ti, 0.70% Al, and 10.0 % Cl, and had Al/Ti molar ratio of 0.28 and a Ci/Ti molar ratio of 3.00.

HMW polymerization and melt blending procedures were used similar to those of Examples 5 and 6 under the following specific conditions: ethylene partial pressure, 99 psi (683 kPa) ; H₂/C₂ molar ratio 0.14; C₆/C₂ molar ratio 0.03; nature of cocatalyst, DIBAH fed in an amount of 560 ppmw; and a productivity of 1350 kg/kg (lb/lb) solid catalyst.

The HMW copolymer produced in the gas phase fluidized bed reactor had an FI of 1.5 g/10 min., an FR of 17.5 g/10 min. and a density of 0.937 g/cc. The HMW copolymer was melt blended with an LMW ethylene homopolymer having an MI of 190 g/10 min. and a density of 0.979 g/cc to produce a bimodal polymer blend having a HMW fraction of 0.5, an MI of 0.36 g/10 min., an FI of 38 g/10 min. an MFR of 106, and a density of 0.956 g/cc. On blow molding this blend, it exhibited an ADS-weight of 0.71 g/in. (0.28g/cm) an ADS-diameter of 2.10 inches (53 mm), and low melt fracture roughness.

The results of this example indicate that the described catalyst is suitable for the production of bimodal resins with properties of sufficient swell and low melt fracture which are highly desirable for blow molding applications.

### Example 9

A catalyst was prepared as follows: A sample of MgO support (Merck-Maglite D (Trade Mark)) was dried in a 500 ml 3-neck flask under nitrogen at 250°C for 16 hours without stirring. 30.8 grams of this dry MgO support was then slurried in 200 ml of dry hexane in a 500-ml 3-neck flask and refluxed for 16 hours with 1.22 ml. of n-octanoic acid at 0.01 molar ratio of the acid to the MgO. A dilute pentanol solution was prepared by adding 53.5 ml of pre-dried 1-pentanol (0.494 mole) to 45 ml of dry hexane in another flask. To avoid a rapid isotherm, 54.4 ml of neat TiCl₄ (0.494 mole) were added dropwise to the 1-pentanol solution to form the titanium compound solution. The (1:1 pentanol/TiCl₄) solution was immediately added to the octanoic acid-treated MgO at room temperature. The slurry was refluxed at 70°C for 16 hours and allowed to cool. The catalyst precursor was washed 6 times with 100 ml of dry hexane and was re-slurried with 200 ml of dry hexane, and 12 ml of 25 wt.% tri-n-hexylaluminum (TnHAl) solution (7.66 mmole TnHAl) was slowly added (about 3 minutes) to form a catalyst having an Al/Ti ratio of 0.23. The catalyst was dried for 16 hours at 65°C under nitrogen purge, to give a free-flowing light brown powder. Elemental analysis indicated that the finished catalyst contained 1.1 mmoles/g of Ti.

HMW polymerization and melt blending procedures were used similar to those of Examples 5, 6 and 8 under the following specific conditions: polymerization reactor temperature, 74°C; catalyst feed, 6.5 g/hr; ethylene partial pressure, 43 psia (296 kPa); H₂/C₂ molar ratio, 0.067; C₆/C₂ molar ratio, 0.058; nature of cocatalyst TEAL, fed in an amount of 300 ppmw; and productivity, 2300 kg/kg (lb/lb) solid catalyst.

The HMW copolymer had an FI of 0.41 g/10 min., a density of 0.9295 g/cc, an SBD of 23.5 lb/ft³ (376 kg/m³) and an APS of 0.483 mm (0.019 inch). The HMW copolymer was melt blended with an LMW ethylene homopolymer having a MI of 250 g/10 min and a density of 0.960 g/cc to produce a bimodal polymer blend having an HMW fraction of 0.58 , a MI of 0.04 g/10 min., a FI of 6.1 g/10 min., a MFR of 153 and a density of 0.95 g/cc. The bimodal blend was blow extruded at a maximum line speed of over 300 ft/min. (91 m/min) and good bubble stability into a film of 1 mil thickness (0.025 mm). The film had an average Dart Impact of 275 g (F₅₀) with an average machine direction (MD) Tear of 29 g/mil (1140 g/mm) and an average transverse direction (TD) Tear of 41 g/mil (1640 g/mm) (ASTM D 1922).

The foregoing results indicate that the catalyst of this example can be used in the tandem gas phase process of this invention to make bimodal resins which can be blow extruded with good bubble stability into films of superior mechanical properties.

### Example 10

The following catalyst preparation was conducted under a nitrogen atmosphere by using Schlenk techniques. 250.8 grams of 955-600 (Trade Mark) silica (Davison 955 (Trade Mark) silica calcined at 600°C for 4 hours) was placed in a 3-liter, 4-necked flask equipped with a nitrogen inlet and a dropping funnel. The silica was slurried with 1500 ml of dry heptane, and the mixture was stirred with a mechanical stirrer. The slurry was then heated to 50-55°C and then 250.8 mmol of dibutyl magnesium was added to the mixture over a 15 minute period. After stirring for 1 hour, 330.7 millimoles of carbon tetrachloride (CCl₄) in 75 ml of heptane were added to the mixture. After stirring for an additional 1 hour, 250.8 millimoles of TiCl₄ in 75 mls of heptane were added. The mixture was stirred for another 1 hour at 50-55°C and then dried with flowing nitrogen for 7 hours to yield a free-flowing catalyst weighing 310 grams. Elemental analysis of this catalyst showed that it contained 3.19 wt.% Ti and 2.09 wt.% Mg.

The catalyst was used to prepare a HMW copolymer in a 4 ft³ (0.11 m³) gas phase fluid bed reactor under the following reactor conditions: 74°C bed temperature; 32 psi (221 kPa) of ethylene; H₂/C₂ molar ratio of 0.035; C₆/C₂ molar ratio of 0.030; DIBAH cocatalyst feed at 570 ppmw. At an average catalyst feed rate of 4.4 grams/hr, an average productivity of 2300 kg (lb) polymer/kg (lb) catalyst was attained. Production rate averaged 23 lb/hr (10 kg/hr) which resulted in an average residence time of 3.0 hours. The HMW copolymer was a 0.41 FI, 0.931 g/cc density product with a FR of 18.

The foregoing results indicate that the described catalyst is suitable for carrying out the gas phase, tandem reactor process of this invention.

## Claims

1. A process for producing a bimodal ethylene polymer blend which process comprises:
contacting in a first gas phase, fluidized bed reaction zone under polymerization conditions, a gaseous monomeric composition comprising a major proportion of ethylene and, optionally, hydrogen, with a Ziegler-Natta or coordination catalyst comprising a transition metal compound as primary catalyst component and an organometallic compound or metal hydride as reducing cocatalyst, the hydrogen/ethylene molar ratio (H₂/C₂ ratio) being no higher than about 0.3 and the ethylene partial pressure being no higher than about 100 psia (690 kPa), to produce a relatively high molecular weight (HMW) polymer associated with catalyst particles;
transferring the HMW polymer associated with catalyst particles to a second gas phase, fluidized bed reaction zone into which is also fed hydrogen and a gaseous monomeric composition comprising a major proportion of ethylene, but no additional transition metal component of the catalyst, under polymerization conditions including a H₂/C₂ ratio of at least about 0.9 and at least about 8.0 times that in said first reaction zone, and an ethylene partial pressure of at least 1.7 times that in said first reaction zone, to produce a low molecular weight (LMW) polymer deposited on and within the voids of the HMW polymer/catalyst particles, the resulting bimodal polymer blend obtained from the second reaction zone having a fraction of HMW polymer of at least about 0.35.

2. A process according to claim 1 wherein the monomeric composition fed to either or both reaction zones comprises a minor amount of a 1-olefin containing 3 to 10 carbon atoms as comonomer.

3. A process according to claim 2 wherein the 1-olefin is 1-hexene.

4. A process according to any preceding claim wherein the monomeric composition entering the first reaction zone comprises ethylene and a comonomer, the molar ratio of comonomer to ethylene being from 0.005 to 0.7 and the monomeric composition entering the second reaction zone consists essentially of ethylene.

5. A process according to any preceding claim wherein the H₂/C₂ molar ratio in the first reaction zone is from 0.005 to 0.2 and the H₂/C₂ molar ratio in the second reaction zone is from 0.9 to 5.0.

6. A process according to claim 5 wherein the H₂/C₂ molar ratio in the second reaction zone is from 1.0 to 3.5, and is from 10 to 200 times the H₂/C₂ molar ratio in the first reaction zone.

7. A process according to any preceding claim wherein the ethylene partial pressure in the first reaction zone is from 15 to 100 psia (103 to 690 kPa), the ethylene partial pressure in the second reaction zone is from 25 to 170 psia (172 to 1170 kPa), and the ratio of ethylene partial pressure in the second reaction zone to that in the first reaction zone is from 1.7 to 7.0.

8. A process according to claim 7 wherein the ethylene partial pressure in the first reaction zone is from 20 to 80 psia (138 to 552 kPa), the ethylene partial pressure in the second reaction zone is from 70 to 120 psia (483 to 827 kPa), and the ratio of ethylene partial pressure in the second reaction zone to that in the first reaction zone is from 2.0 to 4.0.

9. A process according to any preceding claim wherein the fraction of HMW polymer in the product obtained from the second reaction zone is from 0.35 to 0.75.

10. A process according to claim 9 wherein the fraction of HMW polymer is from 0.45 to 0.65.

11. A process according to any preceding claim wherein the temperature in the second reaction zone is at least about 10°C higher than that in the first reaction zone.

12. A process according to claim 11 wherein the temperature in the second reaction zone is from 30 to 60°C higher than that in the first reaction zone.

13. A process according to any preceding claim wherein the transition metal of the catalyst is from Groups IVb, Vb or VIb of the periodic table.

14. A process according to claim 13 wherein the transition metal is titanium.

15. A process according to claims 13 or 14 wherein the reducing catalyst is triethyl aluminium and the primary catalyst has an empirical formula
MgₐTi(OR)_{b}X_{c}(ED)_{d}
wherein R is an aliphatic or aromatic hydrocarbon radical having 1 to 14 carbon atoms or COR' wherein R' is an aliphatic or aromatic hydrocarbon radical having 1 to 14 carbon atoms; each OR group is alike or different; X is Cl, Br, or I, or mixtures thereof; ED is an electron donor, which is a liquid Lewis base in which the precursors of the titanium based complex are soluble; a is 0.5 to 56; b is 0, 1, or 2; c is 1 to 116, particularly 2 to 116; and d is 2 to 85.

16. A process according to claim 15 wherein the electron donor is tetrahydrofuran.

17. A process according to any preceding claim wherein the metal of the reducing cocatalyst is from Groups Ia, IIa or IIIa of the periodic table.

18. A process according to claim 17 wherein the metal of the reducing cocatalyst is aluminium.

19. A process according to any of claims 13 to 18 wherein the catalyst is not combined with the cocatalyst prior to being fed to the first reactor.

20. A process according to any preceding claim wherein an additional amount of reducing cocatalyst is added to the second reaction zone.

21. A process for blow moulding containers comprising:
a) carrying out a process according to claim 1 or 2 to provide a bimodal ethylene polymer blend;
b) recovering a final granular bimodal polymer from the second reaction zone that has a weight fracture of said HMW polymer between 0.35 and 0.75;
c) blow moulding the final polymer of step b) to form a container.

## Patentansprüche

1. Verfahren zur Herstellung eines bimodalen Polyethylen-Blends, bei dem man:
in einer ersten Gasphasen-Wirbelschichtreaktionszone unter Polymerisationsbedingungen eine einen größeren Anteil Ethylen und gegebenenfalls Wasserstoff enthaltende gasförmige Monomerenzusammensetzung mit einem Ziegler-Natta- bzw. Koordinationskatalysator, enthaltend eine Übergangsmetallverbindung als primäre Katalysatorkomponente und eine metallorganische Verbindung oder ein Metallhydrid als reduzierend wirkenden Cokatalysator, in Berührung bringt, wobei das Molverhältnis von Wasserstoff zu Ethylen (H₂/C₂-Verhältnis) nicht mehr als etwa 0,3 und der Ethylen-Partialdruck nicht mehr als etwa 100 psi absolut (690 kPa) beträgt und ein mit Katalysatorteilchen assoziiertes verhältnismäßig hochmolekulares Polymer entsteht und
das mit Katalysatorteilchen assoziierte hochmolekulare Polymer in eine zweite Gasphasen-Wirbelschichtreaktionszone überführt, der unter Polymerisationsbedingungen einschließlich einem H₂/C₂-Verhältnis von mindestens etwa 0,9 und mindestens etwa dem 8,0fachen des Verhältnisses in der ersten Reaktionszone und einem Ethylen-Partialdruck von mindestens dem 1,7fachen des Partialdrucks in der ersten Reaktionszone ebenfalls Wasserstoff und eine einen größeren Anteil Ethylen enthaltende gasförmige Monomerenzusammensetzung, aber keine zusätzliche Übergangsmetallkomponente des Katalysators zugeführt wird, wobei ein auf den Teilchen aus hochmolekularem Polymer und Katalysator und in deren Hohlräumen abgeschiedenes niedermolekulares Polymer entsteht und der aus der zweiten Reaktionszone erhaltene bimodale Polymerblend einen Anteil an niedermolekularem Polymer von mindestens etwa 0,35 aufweist.

2. Verfahren nach Anspruch 1, bei dem man einer oder beiden Reaktionszonen eine Monomerenzusammensetzung zuführt, die eine geringe Menge eines 1-Olefins mit 3 bis 10 Kohlenstoffatomen als Comonomer enthält.

3. Verfahren nach Anspruch 2, bei dem man als 1-Olefin 1-Hexen einsetzt.

4. Verfahren nach einem der vorhergehenden Ansprüche, bei dem man der ersten Reaktionszone eine Monomerenzusammensetzung, die Ethylen und ein Comonomer enthält, wobei das Molverhältnis von Comonomer zu Ethylen 0,005 bis 0,7 beträgt, und der zweiten Reaktionszone eine Monomerenzusammensetzung, die im wesentlichen aus Ethylen besteht, zuführt.

5. Verfahren nach einem der vorhergehenden Ansprüche, bei dem man in der ersten Reaktionszone ein H₂/C₂-Molverhältnis von 0,005 bis 0,2 und in der zweiten Reaktionszone ein H₂/C₂-Molverhältnis von 0,9 bis 5,0 einstellt.

6. Verfahren nach Anspruch 5, bei dem man in der zweiten Reaktionszone ein H₂/C₂-Molverhältnis von 1,0 bis 3,5, das 10- bis 200mal so hoch ist wie das H₂/C₂-Molverhältnis in der ersten Reaktionszone, einstellt.

7. Verfahren nach einem der vorhergehenden Ansprüche, bei dem man in der ersten Reaktionszone einen Ethylen-Partialdruck von 15 bis 100 psi absolut (103 bis 690 kPa), in der zweiten Reaktionszone einen Ethylen-Partialdruck von 25 bis 170 psi absolut (172 bis 1170 kPa) und ein Verhältnis von Ethylen-Partialdruck in der zweiten Reaktionszone zum Ethylen-Partialdruck in der ersten Reaktionszone von 1,7 bis 7,0 einstellt.

8. Verfahren nach Anspruch 7, bei dem man in der ersten Reaktionszone einen Ethylen-Partialdruck von 20 bis 80 psi absolut (138 bis 552 kPa), in der zweiten Reaktionszone einen Ethylen-Partialdruck von 70 bis 120 psi absolut (483 bis 827 kPa) und ein Verhältnis von Ethylen-Partialdruck in der zweiten Reaktionszone zum Ethylen-Partialdruck in der ersten Reaktionszone von 2,0 bis 4,0 einstellt.

9. Verfahren nach einem der vorhergehenden Ansprüche, bei dem der Anteil des hochmolekularen Polymers im aus der zweiten Reaktionszone erhaltenen Produkt 0,35 bis 0,75 beträgt.

10. Verfahren nach Anspruch 9, bei dem der Anteil des hochmolekularen Polymers 0,45 bis 0,65 beträgt.

11. Verfahren nach einem der vorhergehenden Ansprüche, bei dem man in der zweiten Reaktionszone eine Temperatur einstellt, die mindestens etwa 10°C höher ist als die Temperatur in der ersten Reaktionszone.

12. Verfahren nach Anspruch 11, bei dem man in der zweiten Reaktionszone eine Temperatur einstellt, die 30 bis 60°C höher ist als die Temperatur in der ersten Reaktionszone.

13. Verfahren nach einem der vorhergehenden Ansprüche, bei dem man das Übergangsmetall des Katalysators aus den Gruppen IVb, Vb oder VIb des Periodensystems auswählt.

14. Verfahren nach Anspruch 13, bei dem man als Übergangsmetall Titan einsetzt.

15. Verfahren nach Anspruch 13 oder 14, bei dem man als reduzierend wirkenden Cokatalysator Triethylaluminium und einen primären Katalysator der Summenformel
MgₐTi(OR)_{b}X_{c}(ED)_{d},
worin R für einen aliphatischen oder aromatischen Kohlenwasserstoffrest mit 1 bis 14 Kohlenstoffatomen oder COR', worin R' einen aliphatischen oder aromatischen Kohlenwasserstoffrest mit 1 bis 14 Kohlenstoffatomen bedeutet, steht, jede OR-Gruppe gleich oder verschieden sein kann, X für Cl, Br oder I oder Gemische daraus, ED für einen Elektronendonator, bei dem es sich um eine flüssige Lewis-Base handelt, in dem die Vorläufer des auf Titan basierenden Komplexes löslich sind, a für 0,5 bis 56, b für 0, 1 oder 2, c für 1 bis 116, insbesondere 2 bis 116, und d für 2 bis 85 steht, einsetzt.

16. Verfahren nach Anspruch 15, bei dem man als Elektronendonator Tetrahydrofuran einsetzt.

17. Verfahren nach einem der vorhergehenden Ansprüche, bei dem man das Metall des reduzierend wirkenden Cokatalysators aus den Gruppen Ia, IIa oder IIIa des Periodensystems auswählt.

18. Verfahren nach Anspruch 15, bei dem man als Metall des reduzierend wirkenden Cokatalysators Aluminium einsetzt.

19. Verfahren nach einem der Ansprüche 13 bis 18, bei dem man den Katalysator vor der Einspeisung in den ersten Reaktor nicht mit dem Cokatalysator vereinigt.

20. Verfahren nach einem der vorhergehenden Ansprüche, bei dem man der zweiten Reaktionszone eine zusätzliche Menge an reduzierend wirkendem Cokatalysator zuführt.

21. Verfahren zum Blasformen von Behältern, bei dem man:
a) zur Bereitstellung eines bimodalen Polyethylen-Blends das Verfahren nach Anspruch 1 oder 2 ausführt,
b) aus der zweiten Reaktionszone ein fertiges granulatförmiges bimodales Polymer mit einem Gewichtsanteil des hochmolekularen Polymers zwischen 0,35 und 0,75 isoliert und
c) das fertige Polymer aus Schritt b) durch Blasformen zu einem Behälter formt.

## Revendications

1. Procédé de fabrication d'un mélange bimodal de polymères d'éthylène, lequel procédé comprend :
la mise en contact dans une première zone de réaction en phase gazeuse, en lit fluidisé, dans des conditions de polymérisation, d'une composition monomère gazeuse comprenant une proportion majeure d'éthylène et facultativement, d'hydrogène, avec un catalyseur de Ziegler-Natta ou de coordination comprenant un composé de métal de transition comme composant catalytique primaire et un composé organométallique ou un hydrure métallique comme cocatalyseur réducteur, le rapport molaire hydrogène/éthylène (rapport H₂/C₂) n'étant pas supérieur à environ 0,3 et la pression partielle en éthylène n'étant pas supérieure à environ 100 psia (690 kPa), pour produire un polymère de poids moléculaire relativement élevé (PME), associé aux particules de catalyseur;
le transfert du polymère PME associé aux particules de catalyseur dans une deuxième zone de réaction en phase gazeuse, en lit fluidisé, dans laquelle on introduit également de l'hydrogène et une composition monomère gazeuse comprenant une proportion majeure d'éthylène, mais pas de composant supplémentaire de métal de transition du catalyseur, dans des conditions de polymérisation comprenant un rapport H₂/C₂ d'au moins environ 0,9 et d'au moins environ 8,0 fois celui dans ladite première zone de réaction, et une pression partielle d'éthylène d'au moins 1,7 fois celle dans ladite première zone de réaction, pour produire un polymère de poids moléculaire faible (PMF) déposé sur et dans les vides du polymère PME/ desparticules de catalyseur, le mélange bimodal de polymères résultant, obtenu de la deuxième zone de réaction ayant une fraction de polymère PME d'au moins environ 0,35.

2. Procédé suivant la revendication 1, dans lequel la composition monomère introduite dans l'une ou les deux zones de réaction comprend une quantité mineure d'une 1-oléfine contenant 3 à 10 atomes de carbone, comme comonomère.

3. Procédé suivant la revendication 2, dans lequel la 1-oléfine est le 1-hexène.

4. Procédé suivant l'une quelconque des revendications précédentes, dans lequel la composition monomère entrant dans la première zone de réaction comprend de l'éthylène et un comonomère, le rapport molaire du comonomère à l'éthylène étant de 0,005 à 0,7 et la composition monomère entrant dans la deuxième zone de réaction consiste essentiellement en éthylène.

5. Procédé suivant l'une quelconque des revendications précédentes, dans lequel le rapport molaire H₂/C₂ dans la première zone de réaction est de 0,005 à 0,2 et le rapport molaire H₂/C₂ dans la deuxième zone de réaction est de 0,9 à 5,0.

6. Procédé suivant la revendication 5, dans lequel le rapport molaire H₂/C₂ dans la deuxième zone de réaction est de 1,0 à 3,5 et a une valeur de 10 à 200 fois celle du rapport molaire H₂/C₂ dans la première zone de réaction.

7. Procédé suivant l'une quelconque des revendications précédentes, dans lequel la pression partielle d'éthylène dans la première zone de réaction est de 15 à 100 psia (103 et 690 kPa), la pression partielle d'éthylène dans la deuxième zone de réaction est de 25 à 170 psia (172 et 1170 kPa), et le rapport de la pression partielle d'éthylène dans la deuxième zone de réaction à celle dans la première zone de réaction est de 1,7 à 7,0.

8. Procédé suivant la revendication 7, dans lequel la pression partielle en éthylène dans la première zone de réaction est de 20 à 80 psia (138 et 552 kPa), la pression partielle d'éthylène dans la deuxième zone de réaction est de 70 à 120 psia (483 et 827 kPa), et le rapport de la pression partielle d'éthylène dans la deuxième zone de réaction à celle dans la première zone de réaction est de 2,0 à 4,0.

9. Procédé suivant l'une quelconque des revendications précédentes, dans lequel la fraction du polymère PME dans le produit obtenu de la deuxième zone de réaction est de 0,35 à 0,75.

10. Procédé suivant la revendication 9, dans lequel la fraction du polymère PME est de 0,45 à 0,65.

11. Procédé suivant l'une quelconque des revendications précédentes, dans lequel la température dans la deuxième zone de réaction est d'au moins environ 10°C supérieure à celle dans la première zone de réaction.

12. Procédé suivant la revendication 11, dans lequel la température dans la deuxième zone de réaction est de 30 à 60°C supérieure à celle dans la première zone de réaction.

13. Procédé suivant l'une quelconque des revendications précédentes, dans lequel le métal de transition du catalyseur appartient aux groupes IVb, Vb ou VIb du tableau périodique.

14. Procédé suivant la revendication 13, dans lequel le métal de transition est le titane.

15. Procédé suivant la revendication 13 ou 14, dans lequel le catalyseur réducteur est le triéthylaluminium et le catalyseur primaire a une formule empirique
MgₐTi(OR)_{b}X_{c}(ED)_{d}
où R est un radical hydrocarbure aliphatique ou aromatique ayant 1 à 14 atomes de carbone ou COR' où R' est un radical hydrocarbure aliphatique ou aromatique ayant 1 à 14 atomes de carbone; chaque radical OR est identique ou différent; X est Cl, Br ou I ou des mélanges de ceux-ci; ED est un donneur d'électrons, qui est une base de Lewis liquide dans laquelle les précurseurs du complexe à base de titane sont solubles; a vaut 0,5 à 56; b vaut 0, 1 ou 2; c vaut 1 à 116, en particulier 2 à 116, et d vaut 2 à 85.

16. Procédé suivant la revendication 15, dans lequel le donneur d'électrons est le tétrahydrofuranne.

17. Procédé suivant l'une quelconque des revendications précédentes, dans lequel le métal du cocatalyseur réducteur appartient aux groupes Ia, IIa ou IIIa du tableau périodique.

18. Procédé suivant la revendication 17, dans lequel le métal du cocatalyseur réducteur est l'aluminium.

19. Procédé suivant l'une quelconque des revendications 13 à 18, dans lequel le catalyseur n'est pas combiné avec le cocatalyseur avant d'être introduit dans le premier réacteur.

20. Procédé suivant l'une quelconque des revendications précédentes, dans lequel une quantité supplémentaire de cocatalyseur réducteur est ajoutée dans la deuxième zone de réaction.

21. Procédé de moulage par soufflage de récipients, comprenant:
a) la réalisation d'un procédé suivant la revendication 1 ou 2, de fabrication d'un mélange bimodal de polymères d'éthylène;
b) la récupération d'un polymère bimodal granulaire final de la deuxième zone de réaction, qui a une fraction pondérale dudit polymère PME comprise entre 0,35 et 0,75;
c) le moulage par soufflage du polymère final de l'étape b) pour former un récipient.
